# EUROPEAN PATENT APPLICATION

(11) **EP 4 357 909 A1**
(43) Date of publication of application: **24.04.2024**
(21) Application number: 22202137.0
(22) Date of filing: 18.10.2022
(51) Int. Cl.: G06F 8/65, H04W 4/46

(54) **METHOD AND CONTROL SYSTEM FOR HANDLING COMPUTER SOFTWARE TO BE PROVIDED BETWEEN VEHICLES**

(71) Applicant: VOLVO TRUCK CORPORATION, 405 08 Göteborg (SE)
(72) Inventor: STJERNBERG, Oscar, 411 35 Göteborg (SE); WILHELMSSON, Martin, 417 53 Göteborg (SE)
(74) Representative: Valea AB

(57) **Abstract**

This disclosure relates to a computer-implemented method for handling computer software to be provided between vehicles (100). A first vehicle (100a) operates both in a first area (103) which is in coverage of a first communication network and in a second area (105) which is outside the coverage of the first communication network. A second vehicle (100b) operates in the second area (105) which is outside the coverage of the first communication network. A computer software is obtained when the first vehicle (100a) is in the first area (103). The computer software is provided from the first vehicle (100a) to the second vehicle (100b) when the first vehicle (100a) has moved from the first area (103) to the second area (105).

## Description

### TECHNICAL FIELD

The disclosure relates generally to computer system, a computer-implemented method, a control system, a vehicle, a computer system, a computer program product and a non-transitory computer-readable storage medium. In particular aspects, the disclosure relates to handling computer software to be provided between vehicles. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Vehicles comprise a large amount of computer software, software for short. Vehicles have for example safety software, navigation software, autopilot software, etc. Keeping the software up to date on vehicles within a fleet of vehicles is key to a competitor player as well as making sure all the vehicles out in the field are compliant with current and future regulations. Today it is possible to update the software on a vehicle with telematics over the air, i.e. via a wireless communication network, instead of bringing the vehicle to a service center for software updates. Software update via a communication network saves both time and money, thus it increases the utilization of the vehicle. For performing an over the air update, it is key that the vehicle is in such a state that it can receive an update at the current time, i.e. that the vehicle is connected to a communications network like a wireless communication network, a mobile network or a satellite network.

Some vehicles may operate in an area which is out of coverage of a communication network, e.g. a global communication network. Such an area may be a remote part of a forest, in a deep mine etc. Vehicles operating in such areas rarely leave the area and can spend many months or if not years in such an area, which makes it challenging to provide software updates to these vehicles. A consequence of this may be that the vehicles in those areas are running old versions of software, which reduces the possibility for optimized and/or improved operation of the vehicles.

Therefore, there is a need to at least mitigate or solve this issue.

### SUMMARY

According to a first aspect of the disclosure there is provided a computer system comprising a processor device configured to:
- obtain a computer software when a first vehicle is in a first area, the first area being in coverage of a first communication network; and to
- provide the computer software from the first vehicle to a second vehicle in a second area when the first vehicle has moved from the first area to the second area , the second area being outside the coverage of the first communication network.

The first aspect of the disclosure may seek to improve handling of computer software to be provided between vehicles. A technical benefit may comprise that handling of computer software to be provided between vehicles is improved. The second vehicle will be provided with the computer software even though it operates in an area which is out of coverage of the first communication network. The second vehicle may then be provided with a computer software that is up to date. Having an up to date software may enable the second vehicle to operate as efficiently as possible, as compared to having an old version of the computer software. The second vehicle may be provided with new software that it would have not been able to have since it is out of coverage of the first communication network. The first vehicle may visit the first area to perform a certain task and may at the same time be provided with the computer software to be forwarded to the second vehicle at some later time instance. Thus, the first vehicle does not have to perform a dedicated visit to the first area to be provided with the computer software. Thus, the first vehicle does not have to do a separate trip to be provided with the computer software.

According to a second aspect of the disclosure, there is provided a computer-implemented method for handling computer software to be provided between vehicles. A first vehicle operates both in a first area which is in coverage of a first communication network and in a second area which is outside the coverage of the first communication network. A second vehicle operates in the second area which is outside the coverage of the first communication network. The method comprises:
- providing a computer software to the first vehicle when the first vehicle is in the first area; and
- providing the computer software from the first vehicle to the second vehicle when the first vehicle has moved from the first area to the second area.

The second aspect of the disclosure may seek to improve handling of computer software to be provided between vehicles. A technical benefit may comprise that handling of computer software to be provided between vehicles is improved. The second vehicle will be provided with the computer software even though it operates in an area which is out of coverage of the first communication network. The second vehicle may then be provided with a computer software that is up to date. Having an up to date software may enable the second vehicle to operate as efficiently as possible, as compared to having an old version of the computer software. The second vehicle may be provided with new software that it would have not been able to have since it is out of coverage of the first communication network. The first vehicle may visit the first area to perform a certain task and may at the same time be provided with the computer software to be forwarded to the second vehicle at some later time instance. Thus, the first vehicle does not have to perform a dedicated visit to the first area to be provided with the computer software. Thus, the first vehicle does not have to do a separate trip to be provided with the computer software.

In some examples, multiple second vehicles may operate in the second area. The method may comprise:
- providing instructions to the second vehicle to further provide the computer software to at least one other second vehicle in the second area.

A technical benefit may comprise that at least one other second vehicle, in addition to the first or original second vehicle, may also be provided with the computer software. The second vehicle may forward the computer software to the at least one other second vehicle in the second area. Thus, the second vehicle may act as an intermediate unit between the first vehicle and the at least one other second vehicle. It may be only necessary for the first vehicle to be in communication distance with the second vehicle, and not the at least one other second vehicle. It is sufficient that the second vehicle is in communication distance to the at least one other second vehicle. This provides flexibility with regards to the positioning of the vehicles to which the computer software is to be provided.

In some examples, the method may comprise:
- predicting a first time instance when the first vehicle will be in the first area.

The computer software may be obtained by the first vehicle at the predicted first time instance. A technical benefit may comprise that it is possible to know when the first vehicle may expect to obtain the computer software. Thus, the first vehicle may not need to search for or prepare for obtaining the computer software until the first time instance and may instead use its time doing other tasks until the first time instance.

In some examples, the prediction of the first time instance may be based on driving cycle statistics and signal strength of the first communication network. A technical benefit may comprise that the first time instance is predicted with high accuracy, with increased accuracy and/or with an accuracy that is above an acceptance threshold.

In some examples, the method may comprise:
- predicting a second time instance when the first vehicle will move from the first area to the second area and is able to provide the computer software to the second vehicle.

The computer software may be provided from the first vehicle to the second vehicle at the predicted second time instance. A technical benefit may comprise that it is possible to know when the second vehicle may expect to be provided with the computer software. Thus, the second vehicle may not need to search for or prepare for obtaining the computer software until the second time instance and may instead use its time doing other tasks until the second time instance.

In some examples, the prediction of the second time instance may be based on driving cycle statistics and signal strength of the first communication network. A technical benefit may comprise that the second time instance is predicted with high accuracy, with increased accuracy and/or with an accuracy that is above an acceptance threshold.

In some examples, the method may comprise:
- obtaining vehicle data from the second vehicle when both the first vehicle and the second vehicle are in the second area; and
- when the first vehicle has moved from the second area to the first area, providing the vehicle data from the first vehicle to an offboard server for further processing.

A technical benefit may comprise that it is not necessary for the second vehicle to be in coverage of the first area in order to provide its vehicle data to the offboard server. The second vehicle may therefore be able to spend more time on its main task or other tasks, since it does not have to move to the first area to provide the vehicle data to the offboard server. It is sufficient that the first vehicle is in the first area. Thus, the production capacity of the second area may be increased.

In some examples, the second area may be in coverage of the second communication network through which the first vehicle and the second vehicle communicates when they both are at the second area. The second communication network may not necessarily be a global communication network. It may be sufficient that the second communication network has signal strength and features in order to cover the second area, which may typically be of limited size, as compared to the first area. The second communication network may be a local communication network. The first communication network and the second communication network may be different communication networks, for example in the terms of having different sizes, different coverage area, etc.

According to a third aspect of the disclosure, there is provided a control system for handling computer software to be provided between vehicles. The control system is configured to perform the method according to the second aspect. Advantages and effects of the third aspect of the disclosure are largely analogous to the advantages and effects of the first and second aspects of the disclosure. It shall also be noted that all examples of the third aspect of the disclosure are combinable with all examples of the first and second aspects of the disclosure, and vice versa.

According to a fourth aspect of the disclosure, there is provided a vehicle comprising a control system according to the third aspect. Advantages and effects of the fourth aspect of the disclosure are largely analogous to the advantages and effects of the first, second and third aspects of the disclosure. It shall also be noted that all examples of the fourth aspect of the disclosure are combinable with all examples of the first, second and third aspects of the disclosure, and vice versa.

According to a fifth aspect of the disclosure, there is provided a computer program product comprising program code for performing, when executed by a processor device, the method of the first aspect. Advantages and effects of the fifth aspect of the disclosure are largely analogous to the advantages and effects of the first, second, third and fourth aspects of the disclosure. It shall also be noted that all examples of the fifth aspect of the disclosure are combinable with all examples of the first, second, third and fourth aspects of the disclosure, and vice versa.

According to a sixth aspect of the disclosure, there is provided a non-transitory computer-readable storage medium comprising instructions, which when executed by a processor device, cause the processor device to perform the method of the first aspect. Advantages and effects of the sixth aspect of the disclosure are largely analogous to the advantages and effects of the first, second, third, fourth and fifth aspects of the disclosure. It shall also be noted that all examples of the sixth aspect of the disclosure are combinable with all examples of the first, second, third, fourth and fifth aspects of the disclosure, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, control systems, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
- Fig. 1: is a schematic drawing of an exemplary vehicle according to one example.
- Fig. 2: is a schematic drawing of an exemplary vehicle system according to one example.
- Fig. 3: is a schematic drawing of an exemplary vehicle system according to one example.
- Fig. 4: is a schematic drawing of an exemplary vehicle system according to one example.
- Fig. 5: is a flow chart of an exemplary method according to one example.
- Fig. 6a: is a block diagram of an exemplary a control system according to one example.
- Fig. 6b: is block diagram of an exemplary a control system according to one example.
- Fig. 7: is a schematic diagram of an exemplary computer system for implementing examples disclosed herein, according to one example.

The drawings are not necessarily to scale, and the dimensions of certain features may have been exaggerated for the sake of clarity. Emphasis is instead placed upon illustrating the principle.

### DETAILED DESCRIPTION

Aspects set forth below represent the necessary information to enable those skilled in the art to practice the disclosure.

As mentioned above, there is a challenge and need for improvement relating to providing computer software, e.g. new software, updated software etc., to a vehicle operating in an area which is out of coverage of a communication network, e.g. a global communication network. Such an area may be a remote part of a forest, in a deep mine etc. Vehicles operating in such areas rarely leave the area and can spend many months or if not years in such an area. Therefore, it is challenging to provide software updates to vehicles in such out of coverage areas. However, there are usually at least one vehicle that do travel back and forth between locations with and without network communication coverage. This vehicle may then be used as temporary storage or conveyor of new or updated software that it may later share to the vehicles that operates in the remote location which do not have network communication coverage.

Vehicles that drive back and forth to these remote operating areas will, at some point, likely be driving into an area where connection to and consequently updates over the communication network is possible. Using an example of a truck hauling timber. The truck travels to a remote location in a forest to load up timbe. The remote location is out of reach for the communication network. The truck then drives to a sawmill that is within coverage of the communication network. This truck can then download the latest software and store it onboard. When the truck returns to the forest for picking up more timber, the truck shares the latest software with the vehicles at the timber location. The software can be shared either by connecting to a local network at the timber location or the vehicles can share with one and other either through wireless communication or a physical connection such as an ethernet cable.

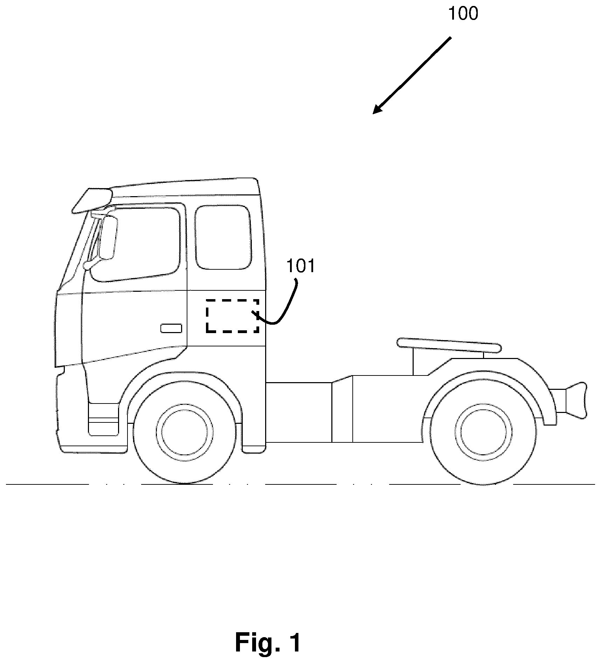

**Fig. 1** is a schematic drawing of an exemplary **vehicle 100** according to one example. The vehicle 100 may be a heavy-duty vehicle, such as for example a truck, buss, and construction equipment. Although the disclosure may be described with respect to a truck, it is not restricted to this particular vehicle, but may also be used in other vehicles such as buses, trailers, wheel loaders, articulated haulers, excavators, backhoe loaders, passenger cars, marine vessels etc. It may also be applied in various industrial construction machines or working machines. It is applicable in fully electrically operated vehicles as well as in hybrid vehicles, comprising also a combustion engine, and in vehicles only operated by a combustion engine, i.e. not having any electrical engine. The term vehicle will be used herein when referring to any of the above types of vehicles.

The vehicle 100 comprises a **control system 101.** The control system 101 may be located at any suitable location in the vehicle 100. The control system 101 may be completely comprised in the vehicle 100, or it may be partly comprised in the vehicle 100. When it is partly comprised in the vehicle 100, then a first part of the control system 101 may be comprised at a remote location and a second part of the control system 101 may be comprised in the vehicle 100, where the first part of the control system 101 is arranged to communicate, wirelessly or via a wired communication link, with the second part of the control system 101. The control system 101 may comprise one or more control units.

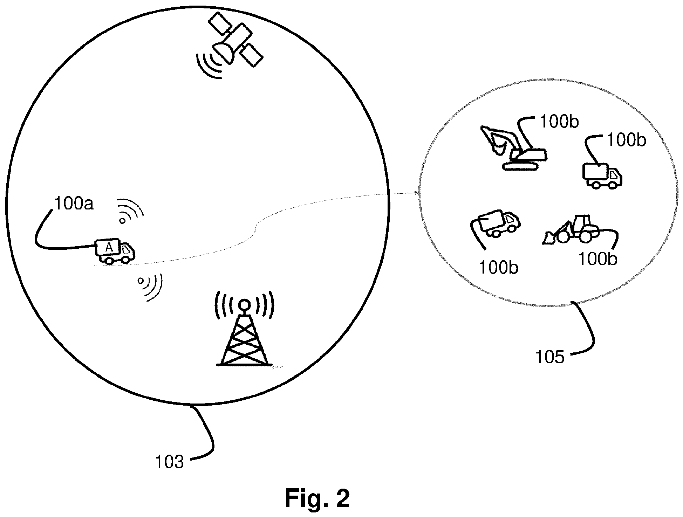

**Fig. 2** is a schematic drawing of an exemplary vehicle system according to one example. Fig. 2 illustrates a **first area 103** which is in coverage of a first communication network and a **second area 105** which is outside the coverage of the first communication network. The second area 105 may be for example a forest, a mine or any other remote area which is outside coverage of the first communication network.

The first communication network may be a global communication network, a telematics network, a mobile communication network, a satellite network. The first communication network may have a first coverage, and the first area 103 may be in the first coverage and the second area 105 may be outside the first coverage. The second area 105 may be in coverage of a second communication network. The second communication network may be e.g. a local communication network which is local to the second area 105. The second communication network may be limited in size and arranged to serve a limited number of vehicles.

The first communication network and the second communication network may be different communication networks and they have different coverage areas. The first communication network may be larger than the second communication network, the second communication network may be remotely located with respect to the first communication network, the first communication network may be arranged to handle a larger amount of communicating entities, e.g. vehicles, compared to the second communication network, the first communication network may have higher or lower signal strength compared to the second communication network, the first communication network may be based on a different communication technology compared to the second communication network etc. For example the first communication network may be a Third Generation Partnership Project (3GPP) network such as a 3G, 4G, 5G, 6G network etc., and the second communication network may be a Wireless Local Aare Network (WLAN), it may be a Wi-Fi network, it may communicate using Bluetooth etc.

There is typically no overlap of the coverage areas of the first communication network and the second communication network.

A **first vehicle 100a** operates both in the first area 103 which is in coverage of the first communication network and in the second area 105 which is outside the coverage of the first communication network. A **second vehicle 100b** operates in the second area 105 which is outside the coverage of the first communication network. The second vehicle 100b has its main operation in the second area 105 and rarely or never leaves the second area 105. The second vehicle 100b may leave the second area 105 for example for maintenance purposes that cannot be done in the second area 105, but it spends most of its time in the second area 105. The second vehicle 100b may be designated, assigned or allocated to the second area 105. The second vehicle 100b may be confined, restricted or limited to the second area 105. The second vehicle 100b may only operate in the second area 105. The second vehicle 100b may operate in the second area 105 for at least x amount of time, where x is for example 50%, 60% etc. The second vehicle 100b may be arranged to operate in the second area 105 in the majority of its operating time or lifetime, for example the operating time or lifetime above a threshold. In other words, it operates in the first area 103 in a limited amount of operating time , i.e. the operating time or lifetime which is less than the operating time or lifetime in which it operates in the second area 105. The first vehicle 100a operates in both the first area 103 and the second area 105. The second area 105 is in coverage of the second communication network. The first vehicle 100a and the second vehicle 100b may be any suitable vehicles 100, as mentioned earlier. The first vehicle 100a and the second vehicle 100b may be of the same or different vehicle types. When the term vehicle together with the reference number 100 is used, it refers to any of the first vehicle 100a and the second vehicle 100b.

In the example shown in fig. 2, the first vehicle 100a is exemplified as a truck. Four second vehicles 100b are exemplified to be comprised in the second area 105, and they may be for example truck, excavator and wheel loader. Note that these are only examples of the vehicles 100 and that any other suitable type of vehicle and number of vehicles may be applicable. When the first vehicle 100a is in the first area 103 it may download a computer software via the first communication network, e.g. from a central server in the first communication network, from a memory unit in the first communication network etc. The first area 103 may comprise a base station or antenna and a satellite arranged to facilitate the communication in the first communication network.

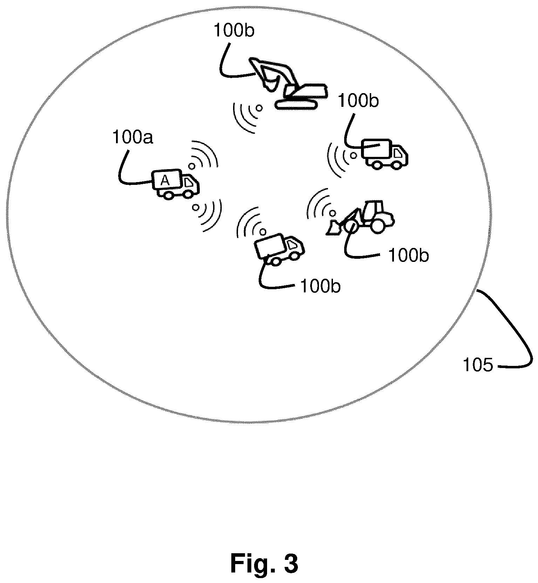

As seen in fig. 2, the second vehicles 100b operate in the second area 105, e.g. a remote location where coverage of the first communication network is not possible, such as a remote part of a forest or a mine. The first vehicle 100a drives back and forth to this second area 105 and when doing so it fetches new software for the second vehicles 100b that it may later share with them. In **fig. 3****,** it is shown how the first vehicle 100a, possibly via the control system 101, shares the computer software to the second vehicles 100b when they are all in the second area 105 which is outside of coverage of the first communication network, but in coverage of the second communication network which is local to the second area 105.

The first vehicle 100a may obtain the computer software from a central server, from a cloud memory, from another vehicle 100 at the first area 103 etc. The first vehicle 100a may obtain the computer software by first sending a request for the computer software, it may automatically obtain the computer software upon entering the first area, it may be pushed to the first vehicle 100a from another entity upon entering the first area or in any other suitable way. The first vehicle 100a may obtain the computer software via a wireless communication link or a wired communication link.

There may be one or more of the second vehicles 100b that obtains the computer software from the first vehicle 100a. For example, all second vehicles 100b may obtain the computer software directly from the first vehicle 100a. In another example, one or a few of the second vehicles 100b may obtain the computer software directly from the first vehicle 100a, and these vehicles 100 may later transfer the computer software to the other second vehicles 100b that did not receive it directly from the first vehicle 100a.

The first vehicle 100a that obtains computer software for transferring to the second vehicles 100b may obtain the computer software at a service center at the first area 103.

A prediction model may be applied to determine when a first vehicle 100a will leave the second area 105 and will be in coverage of the first communication network where it can download the computer software. The prediction model may be applied to determine when it will return to the second area 105. Such a model may be based on driving cycle statistics and signal strength of the first communication network.

The second vehicles 100b in the second area 105 may share statistic information about themself to the first vehicle 100a. The statistic information may comprise for example usage data, fault codes etc. When the first vehicle 100a t is connected to the first communication network it may sends this data to a server for processing.

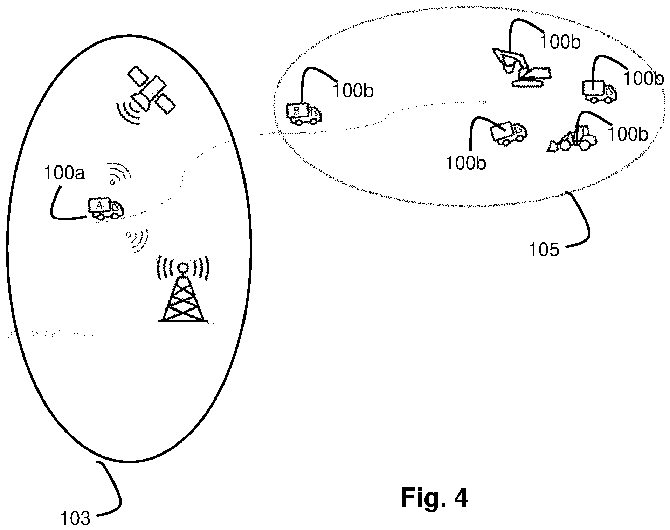

**Fig. 4** illustrates an example where the first vehicle 100a may download the computer software through the first communication network. The first vehicle 100a may share the computer software with one of the second vehicles 100b that in return shares it to the other second vehicles 100b. In this chain there could be a vehicle C, D, E... etc. as well.

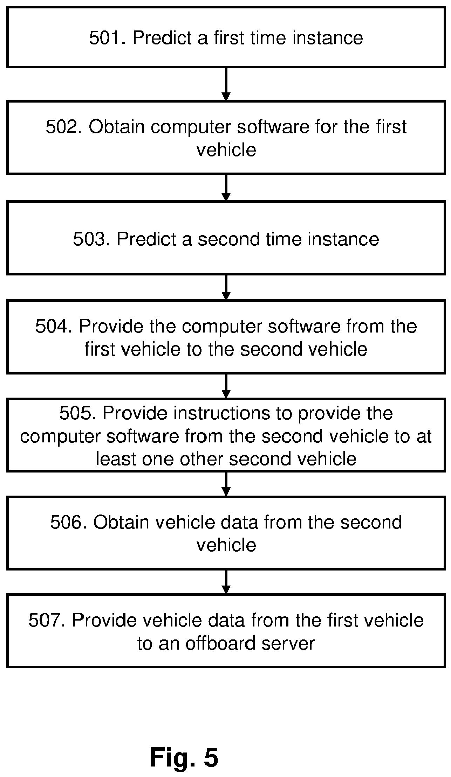

**Fig. 5** is a flow chart of an exemplary method for handling computer software to be provided between vehicles 100, according to one example. The method is a computer-implemented method. The method may be performed by the control system 101 or by the first vehicle 100a or by a processor device of a computer system or by any other suitable unit, device or other entity. The first vehicle 100a operates both in a first area 103 which is in coverage of a first communication network and in a second area 105 which is outside the coverage of the first communication network. The second vehicle 100b operates in the second area 105 which is outside the coverage of the first communication network. The second area 105 may be in coverage of a second communication network through which the first vehicle 100a and the second vehicle 100b communicate. The method comprises at least one of the following steps, which steps may be performed in any suitable order than described below:

### Step 501

Predicting a first time instance when the first vehicle 100a will be in the first area 103.

The prediction of the first time instance may be based on driving cycle statistics and signal strength of the first communication network. Knowledge about the driving cycle statistics and signal strength may be provided to or accessibly by a processor device of a computer system , the control system 101, the first vehicle 100a in any suitable way.

For example, a processor device of a computer system may predict a first time instance when the first vehicle 100a will be in the first area 103.

Step 501 may be performed by a processor device of a computer system, the control system 101 or the first vehicle 100a.

### Step 502

Obtaining a computer software when the first vehicle 100a is in the first area 103. The computer software may be obtained from any suitable unit such as a central server, a memory storage, a cloud memory, another control system, another vehicle at the first area 103 etc. The obtaining may be a result of a detection of that the first vehicle 100a is in coverage of the first communication network. The obtaining may be a result of a previously sent request for the computer software. The obtaining may not necessarily be a result of a request, but the computer software may be pushed or automatically provided by the providing unit.

For example, the processor device of the computer system may obtain a computer software when a first vehicle is in a first area, the first area being in coverage of a first communication network.

It may be the actual computer software that is obtained, or it may be instructions or information indicating an address of where the computer software is stored and from where it may be obtained.

The computer software may be any suitable computer software to be run on the vehicle 100. The computer software may be a new computer software that has not been previously run on the vehicle 100 or it may be an update of a computer software that is already running on the vehicle 100. The computer software may be an onboard computer software.

The computer software may be obtained from a software providing unit via a wireless link or a wired link.

The computer software may be obtained at the first vehicle 100a at the predicted first time instance, which may be predicted in step 501.

Step 502 may be performed by a processor device of a computer system, the control system 101 or the first vehicle 100a.

### Step 503

Predicting a second time instance when the first vehicle 100a will move from the first area 103 to the second area 105 and is able to provide the computer software to the second vehicle 100b.

The prediction of the second time instance may be based on driving cycle statistics and signal strength of the first communication network. Knowledge about the driving cycle statistics and signal strength may be provided to or accessibly by a processor device of a computer system, the control system 101 or the first vehicle 100a in any suitable way.

The second time instance may be a later time instance than the first time instance.

For example, the processor device of the computer system may predict a second time instance when the first vehicle 100a will move from the first area 103 to the second area 105 and is able to provide the computer software to the second vehicle 100b.

Step 503 may be performed by a processor device of a computer system, the control system 101 or the first vehicle 100a.

### Step 504

Providing the computer software from the first vehicle 100a to the second vehicle 100b when the first vehicle 100a has moved from the first area 103 to the second area 105. Consequently, it may be detected that the first vehicle 100a has moved from the first area 103 to the second area 105 before the computer software is provided to the second vehicle 100b.

For example, the processor device of the computer system may provide the computer software from the first vehicle to a second vehicle in a second area when the first vehicle has moved from the first area to the second area, the second area being outside the coverage of the first communication network.

The computer software may be provided from the first vehicle 100a to the second vehicle 100b when it has been detected that a distance between the first vehicle 100a and the second vehicle 100b is at or below a distance threshold.

The computer software may be provided from the first vehicle 100a to the second vehicle 100b when it has been detected that a communication link has been established between them etc.

The computer software may be provided from the first vehicle 100a to the second vehicle 100b using the second communication network at the second location 105. The computer software may be provided from the first vehicle 100a to the second vehicle 100b using a wireless link or wired link. The computer software may be provided from the first vehicle 100a, via a central unit, gateway or hub of the second area 105, to the second vehicle 100b.

The computer software may be provided from the first vehicle 100a to the second vehicle 100b at the predicted second time instance, which may be predicted in step 503. The prediction of the second time instance may be based on driving cycle statistics and signal strength of the first communication network.

Step 504 may be performed by a processor device of a computer system, the control system 101 or the first vehicle 100a.

### Step 505

When multiple second vehicles 100b operate in the second area 105, instructions may be provided to the second vehicle 100b to further provide, e.g. to forward, the computer software to at least one other second vehicle 100b in the second area 105. The second area 105 may comprise any n number of second vehicles 100b, where n is a positive integer.

For example, the processor device of the computer system may provide instructions to the second vehicle 100b to further provide, e.g. to forward, the computer software to at least one other second vehicle 100b in the second area 105.

Step 505 may be performed by a processor device of a computer system, the control system 101 or the first vehicle 100a.

### Step 506

Obtaining vehicle data from the second vehicle 100b when both the first vehicle 100a and the second vehicle 100b are in the second area 105.

The vehicle data may comprise one or more of: statistic data, usage data, fault code data etc.

The vehicle data may be obtained when it has detected that both the second vehicle 100b and the first vehicle 100a are in the second area 105, e.g. by receiving and analyzing their position information, when a communication link has been established between the first vehicle 100a and the second vehicle 100b etc.

A request for the vehicle data may be sent before obtaining the vehicle data. The vehicle data may be obtained without sending a request. The second vehicle 100b may automatically send or push the vehicle data to a processor device of a computer system, the control system 101, the first vehicle 100a when it has determined that both the first vehicle 100a and the second vehicle 100b are in the second area 105, when the second vehicle 100b has detected that a communication link between them has been established etc.

For example, the processor device of the computer system may obtain vehicle data from the second vehicle 100b when both the first vehicle 100a and the second vehicle 100b are in the second area 105.

Step 506 may be performed by a processor device of a computer system, the control system 101 or the first vehicle 100a.

### Step 507

When the first vehicle 100a has moved from the second area 105 to the first area 103, the vehicle data may be provided from the first vehicle 100a to an offboard server for further processing, i.e. offboard with respect to the vehicles 100 and the control system 101.

A request for the vehicle data may be received, e.g. from the offboard server, before it is provided. The
vehicle data may be provided without receiving a request. The vehicle data may be automatically provided or pushed to e.g. the offboard server when it has determined it is in the first area 103, when it has been detected that a communication link between them has been established etc.

For example, the processor device of the computer system may provide the vehicle data from the first vehicle 100a to an offboard server for further processing, i.e. offboard with respect to the vehicles 100 and the control system 101.

Step 507 may be performed by a processor device of a computer system, the control system 101 or the first vehicle 100a.

The control system 101 for handling computer software to be provided between vehicles 100 is arranged to perform the method described herein.

The vehicle 100 may comprises the control system 101. The first vehicle 101a may comprise the control system 101. The control system 101 may comprise one or more control units.

A computer system may comprise a processor device configured to perform the method described herein. The processor device may be the control system 101, or the processor device may comprise the control system 101, or the control system 101 may comprise the processor device.

A computer system comprises a processor device. The processor device is configured to
- obtain a computer software when a first vehicle is in a first area, the first area being coverage of a first communication network; and to
- provide the computer software from the first vehicle to a second vehicle in a second area when the first vehicle has moved from the first area to the second area, the second area being outside the coverage of the first communication network.

The processor device of the computer system may be arranged to perform the method described herein.

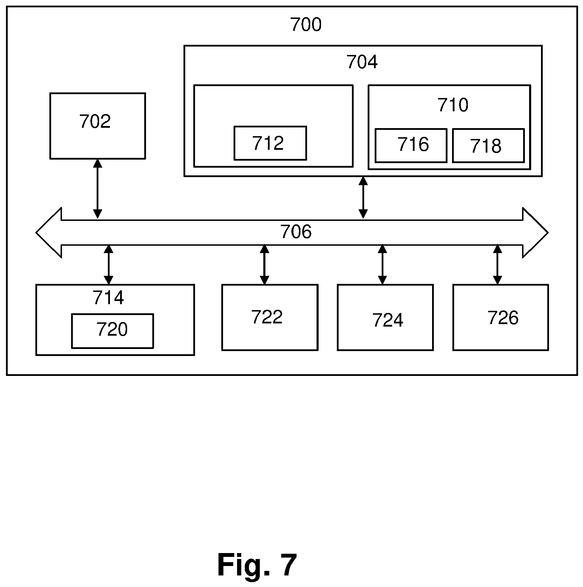

The computer system may be the computer system 700 exemplified in fig. 7 and which will be described in more detail later.

A computer program product may comprise program code for performing, when executed by a processor device, the method described herein.

A non-transitory computer-readable storage medium may comprise instructions, which when executed by a processor device, cause the processor device to perform the method described herein.

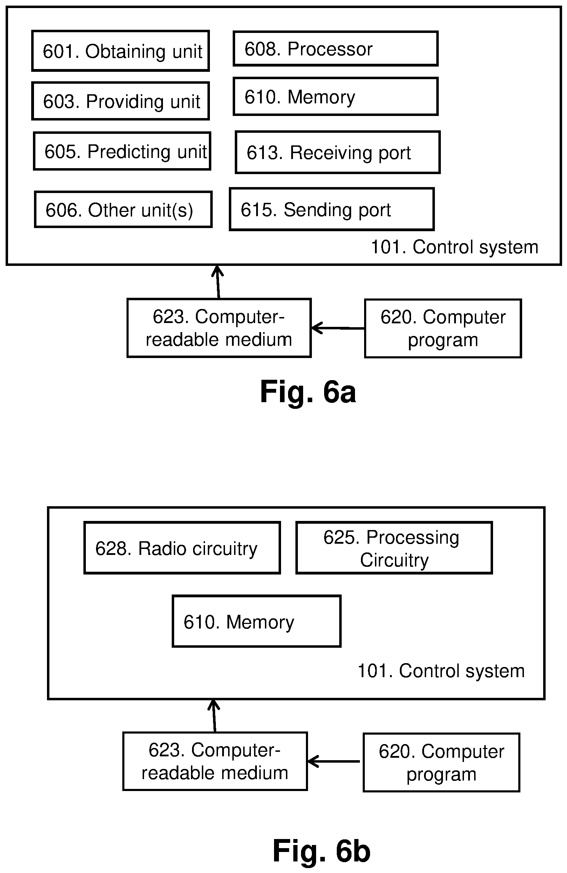

To perform the method steps shown in figs. 2-5 for handling computer software to be provided between vehicles 100, the control system 101 may comprises an arrangement as shown in **fig. 6a** and/or **fig. 6b****.** The arrangement shown in figs. 6a and 6b may also represent a control unit comprised in the control system 101.

**Fig. 6a** and **fig. 6b** depict two different examples in panels a) and b), respectively, of the arrangement that the control system 101 may comprise. The control system 101 may comprise the following arrangement depicted in fig 6a.

The control system 101 is arranged to, e.g. by means of an **obtaining unit 601,** obtaining a computer software when the first vehicle 100a is in the first area. The obtaining unit 601 may also be referred to as an obtaining module, an obtaining means, an obtaining circuit, means for obtaining etc. The obtaining unit 601 may be a **processor 608** of the control system 101 or comprised in the processor 608 of the control system 101. The obtaining system 601 may be a receiver, a transceiver, an input unit etc.

The control system 101 is arranged to, e.g. by means of a **providing unit 603,** provide the computer software from the first vehicle 100a to the second vehicle 100b when the first vehicle 100a has moved from the first area 103 to the second area 105. The providing unit 603 may also be referred to as a providing module, a providing means, a providing circuit, means for providing etc. The providing unit 603 may be the processor 608 of the control system 101 or comprised in the processor 608 of the control system 101. The providing unit 603 may be a transmitter, a transceiver, an output unit etc.

The control system 101 may be arranged to, e.g. by means of the providing unit 603, provide instructions to the second vehicle 100b to further provide, e.g. send, forward etc., the computer software to at least one other second vehicle 100b in the second area 105. One or multiple second vehicles 100b may operate in the second area 105.

The control system 101 may be arranged to, e.g. by means of a **predicting unit 605,** predict a first time instance when the first vehicle 100a may be in the first area 103. The computer software may be obtained at the first vehicle 100a at the predicted first time instance. The prediction of the first time instance may be based on driving cycle statistics and signal strength of the first communication network. The predicting unit 605 may also be referred to as a predicting module, a predicting means, a predicting circuit, means for predicting etc. The predicting unit 605 may be the processor 608 of the control system 101 or comprised in the processor 608 of the control system 101.

The control system 101 may be arranged to, e.g. by means of the predicting unit 605, predict a second time instance when the first vehicle 100a will move from the first area 103 to the second area 105 and is able to, when at the second area 105, provide the computer software to the second vehicle 100b. The computer software may be provided from the first vehicle 100a to the second vehicle 100b at the predicted second time instance. The prediction of the second time instance may be based on driving cycle statistics and signal strength of the first communication network.

The control system 101 may be arranged to, e.g. by means of the obtaining unit 601, obtain vehicle data from the second vehicle 100b when both the first vehicle 100a and the second vehicle 100b are in the second area 105.

The control system 101 may be arranged to, e.g. by means of the providing unit 603, when the first vehicle 100a has moved from the second area 105 to the first area 103, provide the vehicle data from the first vehicle 100a to an offboard server for further processing.

The second area 105 may be in coverage of a second communication network through which the first vehicle 100a and the second vehicle 100b communicate.

The disclosure related to the control system 101 may be implemented through one or more processors, such as the processor 608 in the control system 101 depicted in fig. 6a, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the control system 101. One such carrier may be in the form of a CD ROM disc. It is however feasible with other data carriers such as a memory stick. The computer program code may be provided as pure program code on a server and downloaded to the control system 101.

The control system 101 may comprise a **memory 610** comprising one or more memory units. The memory 610 is arranged to be used to store obtained information, store data, vehicle data, computer software, address information, configurations, schedulings, and applications etc. to perform the methods herein when being executed in the control system 101.

The control system 101 may receive information from, e.g. other units in the first vehicle 100a, the second vehicle 100b, the offboard server etc., through a **receiving port 613.** The receiving port 613 may be, for example, connected to one or more antennas in control system 101. The control system 101 may receive information from another structure in the system through the receiving port 613. Since the receiving port 613 may be in communication with the processor 608, the receiving port 613 may then send the received information to the processor 608. The receiving port 613 may also be configured to receive other information.

The processor 608 in the control system 101 may be configured to transmit or send information to e.g. other units in the first vehicle 100a, the second vehicle 100b, the offboard server or another structure, through a **sending port 615,** which may be in communication with the processor 608 and the memory 610.

Those skilled in the art will also appreciate that the obtaining unit 601, the providing unit 603, the predicting unit 605 and other unit(s) 606 described above may refer to a combination of analogue and digital circuits, and/or one or more processors configured with software and/or firmware, e.g., stored in memory, that, when executed by the one or more processors such as the processor 608, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 601 described above may be implemented as one or more applications running on one or more processors such as the processor 608.

Thus, the methods described herein for the control system 101 may be respectively implemented by means of a **computer program product 620,** comprising instructions, i.e., software code portions, which, when executed on at least one processor 608, cause the at least one processor 608 to carry out the actions described herein, as performed by the control system 101. The computer program 620 product may be stored on a **computer-readable storage medium 623.** The computer-readable storage medium 623, having stored thereon the computer program 620, may comprise instructions which, when executed on at least one processor 608, cause the at least one processor 608 to carry out the actions described herein, as performed by the control system 101. The computer-readable storage medium 623 may be a non-transitory computer-readable storage medium, such as a CD ROM disc, or a memory stick. The computer program product 620 may be stored on a carrier comprising the computer program 620 just described, wherein the carrier is one of an electronic signal, optical signal, radio signal, or the first computer-readable storage medium 623, as described above.

The control system 101 may comprise a communication interface configured to facilitate communications between the control system 101 and other units, vehicles, devices or another structure. The interface may comprise a transceiver configured to transmit and receive radio signals over an air interface in accordance with a suitable standard.

The control system 101 may comprise the following arrangement depicted in fig. 6b. The control system 101 may comprise a **processing circuitry 625,** e.g., one or more processors such as the processor 608, in the control system 101 and the memory 610. The control system 101 may also comprise a **radio circuitry 628,** which may comprise e.g., the receiving port 613 and the sending port 615. The processing circuitry 625 may be configured to, or operable to, perform the method actions according to 2-5, in a similar manner as that described in relation to fig. 6a. The radio circuitry 628 may be configured to set up and maintain at least a wireless connection with the control system 101. Circuitry may be understood herein as a hardware component.

Hence, the present disclosure also relates to the control system 101 operative to operate in the system. The control system 101 may comprise the processing circuitry 625 and the memory 610. The memory 610 comprises instructions executable by the processing circuitry 625. The control system 101 is operative to perform the actions described herein in relation to the control system 101, e.g., in figs. 2-5.

**Fig.** 7 is a schematic diagram of a computer system **700** for implementing examples disclosed herein. The computer system **700** is adapted to execute instructions from a computer-readable medium to perform these and/or any of the functions or processing described herein. The computer system **700** may be connected, e.g., networked, to other machines in a LAN, an intranet, an extranet, or the Internet. While only a single device is illustrated, the computer system **700** may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set or multiple sets of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processor device **702,** may also be referred to as a control unit, a memory **704,** and a system bus **706.** The computer system **700** may include at least one computing device having the processor device **702.** The system bus **706** provides an interface for system components including, but not limited to, the memory **704** and the processor device **702.** The processor device **702** may include any number of hardware components for conducting data or signal processing or for executing computer code stored in memory **704.** The processor device **702,** e.g., control unit, may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **706** may be any of several types of bus structures that may further interconnect to a memory bus, with or without a memory controller, a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processor device **702,** e.g., via a circuit or any other wired, wireless, or network connection, and may include computer code for executing one or more processes described herein. The memory **704** may include non-volatile memory **708,** e.g., read-only memory (ROM), erasable programmable read-only memory (EPROM), electrically erasable programmable read-only memory (EEPROM), etc., and volatile memory **710,** e.g., random-access memory (RAM), or any other medium which can be used to carry or store desired program code in the form of machine-executable instructions or data structures, and which can be accessed by a computer or other machine with a processor device **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD), e.g., enhanced integrated drive electronics (EIDE) or serial advanced technology attachment (SATA), HDD, e.g., EIDE or SATA, for storage, flash memory, or the like. The storage device **714** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program product **720** stored on a transitory or non-transitory computer-usable or computer-readable storage medium, e.g., single medium or multiple media, such as the storage device **714,** which includes complex programming instructions, e.g., complex computer-readable program code, to cause the processor device **702** to carry out the steps described herein. Thus, the computer-readable program code can comprise software instructions for implementing the functionality of the examples described herein when executed by the processor device **702.** The processor device **702** may serve as a controller or control system for the computer system **700** that is to implement the functionality described herein.

The computer system **700** also may include an input device interface **722,** e.g., input device interface and/or output device interface. The input device interface **722** may be configured to receive input and selections to be communicated to the computer system **700** when executing instructions, such as from a keyboard, mouse, touch-sensitive surface, etc. Such input devices may be connected to the processor device **702** through the input device interface **722** coupled to the system bus 706 but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit, e.g., a liquid crystal display (LCD) or a cathode ray tube (CRT). The computer system **700** may also include a communications interface **726** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Summarized, the disclosure enables an ability to identify that a first vehicle 100a is operating together some of the time with other vehicles 100, i.e. the second vehicles 100b, that does not have the ability themselves to use the first communication network to update their onboard computer software. The first vehicle 100a is also operating in a first area 103 where communication to an offboard server is possible, i.e. from which computer software may be downloaded. The first vehicle 100a may then download the computer software from the offboard server for the other vehicles, i.e. the second vehicles 100b that do not have the ability themselves to do so and share it with them when they can communicate with each other at the second area 105.

The second vehicles 100b operate in a second area 105 where the first communication network is out of coverage. The first vehicle 100a drives back and forth to this second location 105 and will at some point be at the first location 103 where it is connected to the first communication network. When it does so, it also downloads the computer software for the second vehicles 100b. The first vehicle 100a who has downloaded the computer software for the second vehicle 100b returns to the second area 105 and shares the computer software with the second vehicle 100b.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system comprising a processor device configured to:
*obtain* (502) a computer software when a first vehicle (100a) is in a first area (103), the first area (103) being in coverage of a first communication network; and to
*provide* (504) the computer software from the first vehicle (100a) to a second vehicle (100b) in a second area when the first vehicle (100a) has moved from the first area (103) to the second area (105), the second area being outside the coverage of the first communication network.

2. A computer-implemented method for handling computer software to be provided between vehicles (100), wherein a first vehicle (100a) operates both in a first area (103) which is in coverage of a first communication network and in a second area (105) which is outside the coverage of the first communication network, wherein a second vehicle (100b) operates in the second area (105) which is outside the coverage of the first communication network, the method comprising;
*obtaining* (502) a computer software when the first vehicle (100a) is in the first area (103); and
*providing* (504) the computer software from the first vehicle (100a) to the second vehicle (100b) when the first vehicle (100a) has moved from the first area (103) to the second area (105).

3. The method according to claim 2, wherein multiple second vehicles (100b) operate in the second area (105), and wherein the method comprises:
*providing* (505) instructions to the second vehicle (100b) to further provide the computer software to at least one other second vehicle (100b) in the second area (105).

4. The method according to any one of claims 2-3, comprising:
*predicting* (501) a first time instance when the first vehicle (100a) will be in the first area (103); and
wherein the computer software is obtained by the first vehicle (100a) at the predicted first time instance.

5. The method according to claim 4, wherein the prediction of the first time instance is based on driving cycle statistics and signal strength of the first communication network.

6. The method according to any of claims 4-5, comprising:
*predicting* (503) a second time instance when the first vehicle (100a) will move from the first area (103) to the second area (105) and is able to provide the computer software to the second vehicle (100b); and
wherein the computer software is provided from the first vehicle (100a) to the second vehicle (100b) at the predicted second time instance.

7. The method according to claim 6, wherein the prediction of the second time instance is based on driving cycle statistics and signal strength of the first communication network.

8. The method according to any one of claims 2-7, comprising:
*obtaining* (506) vehicle data from the second vehicle (100b) when both the first vehicle (100a) and the second vehicle (100b) are in the second area (105); and
when the first vehicle (100a) has moved from the second area (105) to the first area (103), *providing* (507) the vehicle data from the first vehicle (100a) to an offboard server for further processing.

9. The method according to any of the preceding claims, wherein the second area (105) is in coverage of a second communication network through which the first vehicle (100a) and the second vehicle (100b) communicates.

10. A control system (101) for handling computer software to be provided between vehicles (100), wherein the control system (101) is configured to perform the method according to any of claims 2-9.

11. A vehicle (100) comprising a control system (101) according to claim 10.

12. A computer program product comprising program code for performing, when executed by a processor device, the method of any of claims 1-9.

13. A non-transitory computer-readable storage medium comprising instructions, which when executed by a processor device, cause the processor device to perform the method of any of claims 1-9.
